# DEMANDE DE BREVET EUROPEEN

(11) **EP 4 570 462 A1**
(43) Date de publication de la demande: **18.06.2025**
(21) Numéro de dépôt: 24212752.0
(22) Date de dépôt: 13.11.2024
(51) Int. Cl.: B26D 1/16, B26D 1/18, B26D 5/06, B26D 5/08, B26D 5/20, B26D 7/06, B65H 35/02, B26D 11/00, B65H 35/04, B23D 45/02, B23D 45/10, B26D 1/60, B23D 45/20

(54) **DISPOSITIF ET PROCÉDÉ DE DÉCOUPE D'UN MATÉRIAU SOLIDE ENTRAINÉ EN DÉPLACEMENT**

(30) Priorité: 15.12.2023 FR 2314324
(71) Demandeur: Alfi Technologies, 49110 Beaupréau-en-Mauges (FR)
(72) Inventeur: LIMOUSIN, Laurent, 49170 La Possonnière (FR); LEGUAY, Sylvain, 49230 St Germain sur Moine (FR); CHATEAU, Alain, 49110 Le Pin-en-Mauges (FR)
(74) Mandataire: Ipsilon

(57) **Abrégé**

L'invention concerne un dispositif de découpe d'une nappe (21) d'un matériau solide non pulvérulent, entraînée en déplacement par un convoyeur (2) selon une direction, dite direction (5) de convoyage, parallèle à une plus grande dimension de la nappe (21),
le dispositif (1) de découpe comprenant :
- un convoyeur (2) adapté pour pouvoir entraîner la nappe de matériau solide en déplacement d'amont vers l'aval selon une direction, dite direction (5) de convoyage, parallèle à une plus grande dimension de la nappe (21),
- un ensemble, dit ensemble (6) de découpe transversale, d'au moins deux lames (10,11) discoïdales s'étendant chacune dans un plan parallèle à une direction, dite direction (8) de découpe transversale, orthogonale à ladite direction de convoyage,
- au moins un chariot (7) support dudit ensemble (6) de découpe transversale,
- des moyens (20) d'entrainement du chariot (7) selon ladite direction (5) de convoyage à vitesse d'entrainement égale à la vitesse de convoyage de la nappe sur le convoyeur (2) selon ladite direction (5) de convoyage,

caractérisé en ce que ;
le chariot (7) comprend des moyens (24) d'entrainement dudit ensemble (6) de découpe transversale en déplacement sur toute la largeur de la nappe selon ladite direction (8) de découpe transversale, et en ce que ;
ledit ensemble (6) de découpe transversale comprend des moyens (25) d'orientation dudit ensemble (6) de découpe transversale adaptés pour, dans un premier sens (9) de déplacement dudit ensemble (6) de découpe transversale selon ladite direction (8) de découpe transversale, maintenir une première lame (10) dudit ensemble (6) de découpe transversale dans une position abaissée dans laquelle la première lame (10) est entraînée en rotation de façon à découper la nappe (2) transversalement sur toute sa largeur dans le premier sens (9) de déplacement et maintenir une deuxième lame (11) dudit ensemble de découpe transversale dans une position relevée à distance de la nappe de façon à ne pas découper la nappe (2).

## Description

### Domaine technique

L'invention concerne un dispositif de découpe d'une nappe d'un matériau solide entraînée en déplacement depuis une zone de fabrication vers une zone de stockage ainsi qu'un procédé de découpe desdits produits au moyen dudit dispositif de découpe.

L'invention concerne notamment un dispositif de découpe d'une nappe d'un matériau solide non pulvérulent entraîné en déplacement sur un convoyeur selon une direction, dite direction de convoyage, parallèle à une plus grande dimension de la nappe et un procédé de découpe d'une telle nappe de matériau solide non pulvérulent entraîné en déplacement sur un convoyeur selon ladite direction de convoyage.

La production pour la construction, de panneaux isolants en fibres minérales, comme la laine de verre ou la laine de roche, ou en fibres végétales consiste à former une nappe continue et de grande dimension d'un matériau précurseur d'un tel matériau isolant, à chauffer la nappe continue d'un tel matériau précurseur aux fins de finalisation de fabrication du matériau isolant et/ou de son séchage à plat, puis à une découpe de la nappe formée en panneaux isolants propres à être commercialisés.

### Arrière-plan technologique

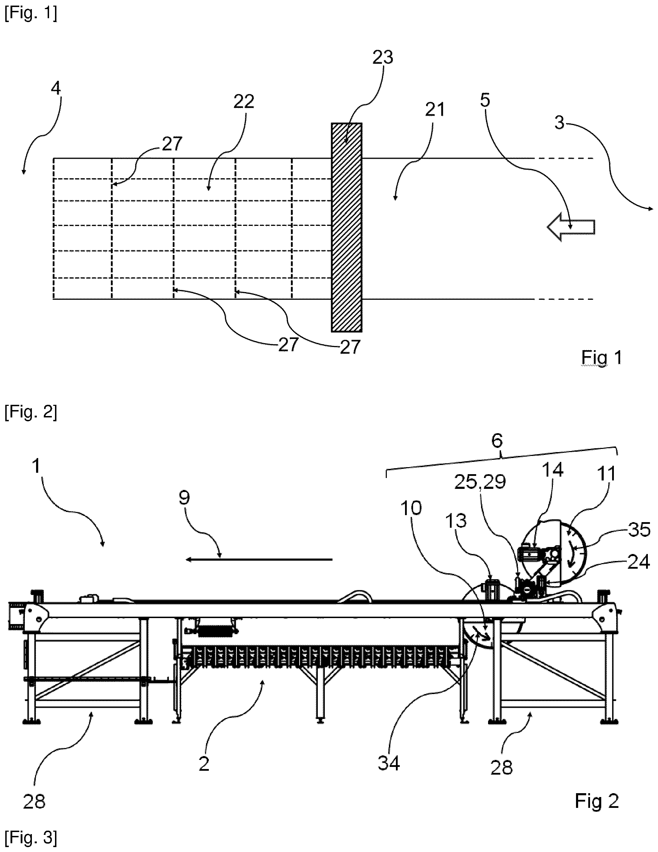

Un exemple de nappe ainsi formée est représenté schématiquement à la figure 1 à titre d'illustration de l'art antérieur. Comme illustré, la nappe 21 se présentant sous la forme d'une bande sensiblement continue progressant selon une direction de convoyage représentée par la flèche 5 en provenance d'une zone de fabrication 3. Cette nappe 21 est ensuite découpée au moyen d'un dispositif 23 de découpe, connu de l'art antérieur, en panneaux 22 de plus petites tailles qui sont alors empilés, conditionnés puis stockés dans une zone 4 aval, pour être commercialisés. Les panneaux 22 formés par découpage de la nappe 21 ont une forme globale de parallélépipède rectangle, les découpes 27 s'étendant perpendiculairement à la plus grande dimension de la nappe.

On connaît du document US2010/186562 un dispositif pour découper en panneaux de plus petites dimensions, une nappe de laine de verre de plus grandes dimensions, entraînée en déplacement sur un convoyeur, en vue de l'expédition des panneaux. Le dispositif de US2010/186562 comprend deux lames discoïdales rotatives et entraînées lors de la découpe, dans un mouvement de balancier selon un axe de rotation horizontal. Du fait de ce mouvement de balancier non linéaire lors de la découpe, le dispositif de US2010/186562 est limité dans son utilisation à la découpe d'une nappe de laine de verre de largeur compatible avec l'amplitude du mouvement de balancier de chacune des lames.

L'invention vise donc à pallier cet inconvénient.

L'invention vise donc à proposer un dispositif et un procédé de découpe d'une nappe d'un matériau solide entraînée en déplacement, permettant une découpe transversale de la nappe entraînée en déplacement, sans limitation de la largeur de la nappe.

L'invention vise aussi à proposer un dispositif et un procédé de découpe d'une nappe d'un matériau solide entraînée en déplacement, permettant une augmentation de la cadence de découpe.

Ainsi, l'invention vise aussi à proposer un dispositif et un procédé de découpe d'une nappe d'un matériau solide entraînée en déplacement, permettant une augmentation de la vitesse de déplacement de la nappe.

L'invention vise donc à proposer un dispositif et un procédé de découpe d'une nappe d'un matériau solide entraînée en déplacement, permettant une augmentation de la cadence de découpe de la nappe et de la productivité d'une chaîne de production de panneaux en matériau solide, notamment en matériau solide isolant.

L'invention vise aussi à proposer un dispositif et un procédé de découpe d'une nappe d'un matériau solide entraînée en déplacement permettant une optimisation de la durée de vie du dispositif et de ses éléments constitutifs.

L'invention vise aussi à proposer un dispositif et un procédé de découpe d'une nappe d'un matériau solide entraînée en déplacement permettant une optimisation de la consommation en énergie électrique.

### Résumé de l'invention

L'invention concerne un dispositif de découpe d'une nappe d'un matériau solide, entraînée en déplacement par un convoyeur selon une direction, dite direction de convoyage, parallèle à une plus grande dimension de la nappe,
le dispositif de découpe comprenant :
   - un ensemble, dit ensemble de découpe transversale, d'au moins deux - notamment de deux- lames discoïdales s'étendant chacune dans un plan parallèle à une direction, dite direction de découpe transversale, orthogonale à ladite direction de convoyage,
   - au moins un chariot supportant ledit ensemble de découpe transversale,
   - des moyens d'entrainement du chariot selon ladite direction de convoyage avec une vitesse d'entrainement sensiblement égale -notamment égale- à une vitesse de convoyage de la nappe sur le convoyeur selon ladite direction de convoyage,
caractérisé en ce que ;
ledit au moins un chariot comprend des moyens d'entrainement dudit ensemble de découpe transversale en déplacement sur toute la largeur de la nappe selon ladite direction de découpe transversale, et en ce que ;
ledit ensemble de découpe transversale comprend des moyens d'orientation dudit ensemble de découpe transversale adaptés pour, dans un premier sens de déplacement dudit ensemble de découpe transversale selon ladite direction de découpe transversale, maintenir une première lame dudit ensemble de découpe transversale dans une position abaissée dans laquelle la première lame est entraînée en rotation pour découper la nappe transversalement sur toute sa largeur dans le premier sens de déplacement et maintenir une deuxième lame dudit ensemble de découpe transversale dans une position relevée à distance de la nappe de façon à ne pas découper la nappe.

Dans tout le texte :
- les termes « au-dessus » et « au-dessous » se réfèrent à un dispositif selon l'invention en état de fonctionnement dans lequel la nappe de matériau solde est supportée par le convoyeur du fait des forces de gravité,
- les termes « aval » et « amont » sont définis par rapport à la direction et au sens de convoyage de la nappe sur le convoyeur. La partie « amont » du dispositif selon l'invention correspond à la zone d'approvisionnement du dispositif de découpe selon l'invention avec la nappe de matériau solide non pulvérulent et la partie « aval » du dispositif selon l'invention correspond à la zone de production, d'acheminement et de stockage des panneaux dudit matériau solide non pulvérulent découpés à partir de la nappe de matériau solide par le dispositif de découpe selon l'invention.

Selon certains modes de réalisation, le matériau solide est un matériau de construction. Il peut s'agir d'un matériau de construction isolant thermique et/ou phonique. Il peut s'agir d'un matériau solide comprenant des fibres minérales, telles que des fibres de verre (laine de verre) ou des fibres de roche (laine de roche). Il peut aussi s'agir d'un matériau solide comprenant des fibres céramiques. Il peut aussi s'agir d'un matériau solide comprenant des fibres d'origine végétale, telles que, par exemple, des fibres de chanvre, des fibres de lin, des fibres de cellulose, notamment de fibres de coton, de fibres de bois et de fibres de coco. Selon ces modes de réalisation, la nappe de matériau solide non pulvérulent est entraînée par un convoyeur, de l'amont vers aval, entre un site de production de la nappe et un site de stockage de panneaux dudit matériau solide découpés à partir de la nappe.

Selon certains modes de réalisation, le convoyeur peut être de tout type. Il peut s'agir d'un convoyeur à bande ou courroie. Avantageusement, le convoyeur peut être un convoyeur à courroie plate. Il peut aussi s'agir d'un convoyeur à rouleaux. Le convoyeur peut présenter toute largeur adaptée pour recevoir et convoyer activement une nappe d'un matériau solide non pulvérulent. Selon certains modes de réalisation préférentiels, le convoyeur présente une surface de convoyage sensiblement plane et horizontale.

Selon certains modes de réalisation, le chariot est disposé de façon à s'étendre au-dessus du convoyeur et transversalement par rapport au convoyeur et sur toute sa largeur. Le chariot est disposé de façon à permettre le convoyage de la nappe sur le convoyeur, à permettre le déplacement dudit ensemble de découpe transversale sur toute la largeur de la nappe selon ladite direction de découpe transversale et à permettre la découpe de la nappe par les lames dudit ensemble de découpe transversale.

Selon certains modes de réalisation, le chariot comprend au moins un rail transversal de guidage rectiligne de l'ensemble de découpe transversale, l'ensemble de découpe transversale étant entraîné en déplacement transversal par rapport au rail transversal et sur le rail transversal au moyen d'un dispositif d'entrainement comprenant une courroie crantée, une chaîne, un entraînement à cardan ou un entrainement à pignon crémaillère.

Le dispositif de découpe selon l'invention comprend des moyens d'entrainement en déplacement du chariot et dudit ensemble de découpe transversale selon ladite direction de convoyage. Les moyens d'entrainement en déplacement du chariot selon ladite direction de convoyage sont configurés pour permettre un déplacement du chariot et dudit ensemble de découpe transversale vers l'aval selon ladite direction de convoyage de façon à accompagner le déplacement de la nappe par le convoyeur, à la même vitesse que la nappe sur le convoyeur, et pour obtenir une découpe de la nappe selon ladite direction de découpe transversale, c'est-à-dire une découpe orthogonale au bord de la nappe, malgré le déplacement de la nappe sur le convoyeur. Les moyens d'entrainement du chariot et dudit ensemble de découpe transversale sont adaptés pour entraîner le chariot et ledit ensemble de découpe transversale en déplacement selon ladite direction de convoyage avec une vitesse d'entrainement égale à une vitesse de convoyage de la nappe sur le convoyeur selon ladite direction de convoyage. Mais les moyens d'entrainement en déplacement du chariot selon ladite direction de convoyage sont aussi configurés pour permettre un déplacement du chariot vers l'amont selon ladite direction de convoyage et rappeler le chariot et ledit ensemble de découpe transversale dans une position adaptée pour permettre une initiation d'une découpe transversale subséquente.

Les moyens d'entrainement dudit ensemble de découpe transversale en déplacement sur toute la largeur de la nappe selon ladite direction de découpe transversale sont des moyens d'entrainement dudit ensemble de découpe transversale en translation rectiligne par rapport au chariot selon ladite direction de découpe transversale.

Selon certains modes de réalisation avantageux d'un dispositif de découpe selon l'invention, les moyens d'entrainement dudit ensemble de découpe transversale en déplacement sur toute la largeur de la nappe selon ladite direction de découpe transversale sont des moyens d'entrainement dans l'un et l'autre des deux sens opposés de déplacement dudit ensemble de découpe transversale selon ladite direction de découpe transversale. La cadence de découpe est ainsi augmentée.

Selon l'invention, les au moins deux lames discoïdales dudit ensemble de découpe transversale s'étendent chacune dans un plan parallèle à ladite direction de découpe transversale et dans un plan non parallèle à ladite direction de convoyage. Selon certains de ces modes de réalisation, les lames discoïdales sont coplanaires. Rien n'empêche cependant, selon certains de ces modes de réalisation, de prévoir que chaque lame de l'ensemble de découpe transversale présente une inclinaison choisie pour produire une découpe biseautée. Selon certains modes de réalisation, les lames discoïdales s'étendent dans un plan orthogonal à ladite direction de convoyage.

Selon certains modes de réalisation avantageux selon l'invention, les moyens d'orientation dudit ensemble de découpe transversale sont adaptés pour, dans un deuxième sens de déplacement dudit ensemble de découpe transversale par rapport au chariot, opposé au premier sens de déplacement, la deuxième lame est dans une position abaissée dans laquelle la deuxième lame est entraînée pour découper la nappe transversalement sur toute sa largeur et la première lame dudit ensemble de découpe transversale est dans une position relevée à distance de la nappe de façon à ne pas découper la nappe.

Selon certains modes de réalisation avantageux de l'invention, les moyens d'orientation dudit ensemble de découpe transversale sont adaptés pour permettre :
- un abaissement de ladite première lame et un maintien de ladite première lame en position abaissée dans le premier sens de déplacement dudit ensemble de découpe transversale selon ladite direction de découpe transversale et un levage de ladite deuxième lame en position relevée dans ce premier sens de déplacement, et
- un abaissement de ladite deuxième lame et un maintien de ladite deuxième lame en position abaissée dans le deuxième sens de déplacement dudit ensemble de découpe transversale selon ladite direction de découpe transversale et un levage de ladite première lame en position relevée dans ce deuxième sens de déplacement.

Selon certains modes de réalisation, le dispositif selon l'invention comprend au moins une carte électronique configurée pour contrôler :
- les moyens d'entrainement du chariot selon ladite direction de convoyage de façon à entraîner ledit ensemble de découpe transversale de l'amont vers l'aval avec une vitesse égale à la vitesse de convoyage de la nappe selon ladite direction de convoyage lorsque les moyens d'entrainement dudit ensemble de découpe transversale entraînent ledit ensemble de découpe transversale selon l'un des premier et deuxième sens de déplacement dudit ensemble de découpe transversale, et/ou
- les moyens d'entrainement du chariot selon ladite direction de convoyage de façon à entraîner ledit ensemble de découpe transversale de l'aval vers l'amont avec une vitesse supérieure à la vitesse de convoyage de la nappe selon ladite direction de convoyage, lorsque les moyens d'entrainement dudit ensemble de découpe transversale n'entraînent pas ledit ensemble de découpe transversale selon des premier et deuxième sens de déplacement dudit ensemble de découpe transversale, et/ou
- les moyens d'entrainement dudit ensemble de découpe transversale en déplacement sur toute la largeur de la nappe selon ladite direction de découpe transversale dans chacun des premier et deuxième sens de déplacement dudit ensemble de découpe transversale, de façon à entraîner ledit ensemble de découpe transversale avec une vitesse adaptée pour découper la nappe orthogonalement à la plus grande dimension de la nappe dans le premier sens et dans le deuxième sens de déplacement dudit ensemble de découpe transversale,
- les moyens d'orientation dudit ensemble de découpe transversale dans les premier et deuxième sens de déplacement dudit ensemble de découpe transversale.

Selon ces modes de réalisation, la carte électronique du dispositif selon l'invention permet un ajustement d'au moins l'une des plus grandes dimensions (hormis l'épaisseur) des panneaux dudit matériau solide découpés à partir de la nappe.

Selon certains modes de réalisation, ledit ensemble de découpe transversale comprend deux lames discoïdales, chacune des deux lames discoïdales étant munie d'un dispositif moteur propre d'entrainement de la lame en rotation.

Selon certains modes de réalisation, ledit ensemble de découpe transversale est conformé pour présenter un angle a de basculement de valeur non nulle et inférieure ou égale à 180°. La valeur d'angle α de basculement est adaptée en regard d'une plus petite dimension -notamment une épaisseur- de la nappe à découper.

Selon certains modes de réalisation, le dispositif de découpe selon l'invention comprend un dispositif moteur de basculement dudit ensemble de découpe transversale selon un axe de basculement parallèle à ladite direction de convoyage. Selon certains modes de réalisation, le dispositif moteur de basculement est adapté pour entraîner ledit ensemble de découpe transversale en rotation selon l'axe de basculement et avec une valeur d'angle de rotation non nulle et inférieure ou égale à 180°, notamment de l'ordre de 90°, dans l'un et l'autre des deux sens de rotation horaire et antihoraire. Selon ces modes de réalisation, le dispositif moteur de basculement permet une orientation alternativement de chacune des première et deuxième lames dans une orientation de découpe.

Selon certains modes de réalisation, la première lame et la deuxième lame dudit ensemble de découpe transversale présentent des sens de rotation opposés. Selon ces modes de réalisation, la première lame est disposée pour découper la nappe dans l'un des premier et deuxième sens de déplacement dudit ensemble de découpe transversale selon ladite direction de découpe transversale et la deuxième lame est disposée pour découper la nappe dans l'autre des premier et deuxième sens de déplacement dudit ensemble de découpe transversale selon ladite direction de découpe transversale.

Selon certains modes de réalisation avantageux, le dispositif moteur d'entrainement de la première lame et le dispositif moteur d'entrainement de la deuxième lame entraînent respectivement la première lame et la deuxième lame en rotation sans interruption de l'entrainement et de la rotation lors du défilement de la nappe. En réalité, du fait du choix des deux lames présentant des sens de rotation opposés, les phases de démarrage et d'arrêt des dispositifs moteurs sont inutiles et la longévité des moteurs est améliorée. En outre, la cadence de découpe est augmentée.

Selon ces modes de réalisation avantageux, le dispositif moteur d'entrainement de la première lame et le dispositif moteur d'entrainement de la deuxième lame entraînent respectivement la première lame et la deuxième lame en rotation sans inversion du sens de rotation de chacune des première et deuxième lames lors du défilement de la nappe. En réalité, le choix des deux lames présentant des sens de rotation opposés permet de supprimer totalement les phases d'inversion du sens de rotation des première et deuxième lames lors du défilement de la nappe. Les phases d'inversion du sens de rotation des première et deuxième lames sont inutiles et la longévité des moteurs est améliorée. En outre, la cadence de découpe est augmentée.

Selon certains modes de réalisation, le dispositif de découpe selon l'invention comprend un unique chariot supportant un unique ensemble, dit ensemble de découpe transversale, d'au moins deux -notamment de deux-lames discoïdales s'étendant chacune dans un plan parallèle à une direction, dite direction de découpe transversale, orthogonale à ladite direction de convoyage.

Rien n'empêche cependant de prévoir, selon certains autres modes de réalisation, que le dispositif de découpe selon l'invention comprend une pluralité de chariots -notamment deux chariots ou plus-, chaque chariot supportant un unique ensemble, dit ensemble de découpe transversale, d'au moins deux - notamment de deux- lames discoïdales s'étendant chacune dans un plan parallèle à une direction, dite direction de découpe transversale, orthogonale à ladite direction de convoyage. Dans ces autres modes de réalisation, le nombre de découpe et la cadence de découpe peuvent être augmentés.

Selon certains modes de réalisation, le dispositif de découpe selon l'invention comprend au moins un deuxième ensemble de lames, dit ensemble de découpe longitudinale, disposé en amont dudit ensemble de découpe transversale, et adapté pour découper la nappe de matériau solide selon une direction de coupe parallèle à la direction de déplacement de la nappe.

Rien n'empêche cependant de prévoir que ledit ensemble de découpe longitudinale soit disposé en aval dudit ensemble de découpe transversale, et adapté pour découper des tronçons formés dans la nappe de matériau solide par ledit ensemble de découpe transversale, selon une direction de coupe parallèle à la direction de déplacement de la nappe.

Selon certains de ces modes de réalisation, au moins l'une -notamment chacune- des lames dudit ensemble de découpe longitudinale est escamotable. Selon certains de ces modes de réalisation, au moins l'une -notamment chacune-des lames dudit ensemble de découpe longitudinale est adaptée pour pouvoir être repositionnable transversalement, selon ladite direction de découpe transversale. Selon ces modes de réalisation, le dispositif de découpe selon l'invention permet de contrôler au moins une deuxième des plus grandes dimensions (hormis l'épaisseur) des panneaux dudit matériau solide découpés à partir de la nappe.

Selon certains modes de réalisation, le dispositif de découpe selon l'invention est adapté pour permettre une découpe de la nappe par ledit ensemble de découpe transversale de façon à former au moins un panneau dudit matériau solide présentant une plus grande dimension -une longueur- parallèle à ladite direction de convoyage. Selon certains autres modes de réalisation, le dispositif de découpe selon l'invention est adapté pour permettre une découpe de la nappe par ledit ensemble de découpe transversale de façon à former au moins un panneau dudit matériau solide présentant une plus grande dimension -une longueur- orthogonale à ladite direction de convoyage.

Selon certains modes de réalisation, ledit ensemble de découpe transversale est monté sur le chariot et mobile selon ladite direction de découpe transversale sur une distance adaptée à la largeur de la nappe. Selon certains modes de réalisation, ledit ensemble de découpe transversale est monté sur le chariot et mobile selon ladite direction de découpe transversale sur une distance comprise entre de l'ordre de 1,0 m et de l'ordre de 6,0 m, notamment comprise entre de l'ordre de 1,0 m et de l'ordre de 5,0 m, de préférence comprise entre de l'ordre de 2,0 m et de l'ordre de 4,0 m, plus préférentiellement comprise entre de l'ordre de 2,4 m et 3,6 m.

Selon certains modes de réalisation, le convoyeur est configuré pour pouvoir entraîner la nappe de matériau solide en déplacement selon ladite direction de convoyage avec une vitesse comprise entre de l'ordre de 1 m/min et de l'ordre de 50 m/min, par exemple de l'ordre de 25 m/min.

Selon certains modes de réalisation, chacune des première lame et deuxième lame dudit ensemble de découpe transversale présente un diamètre adapté selon l'épaisseur de la nappe. Selon certains modes de réalisation, chacune des première lame et deuxième lame dudit ensemble de découpe transversale présente un diamètre compris entre de l'ordre de 300 mm et de l'ordre de 1300 mm, par exemple de l'ordre de 900 mm.

L'invention s'étend aussi à un procédé de découpe d'une nappe d'un matériau solide entraînée en déplacement d'amont en aval selon une direction, dite direction de convoyage, parallèle à une plus grande dimension de la nappe, procédé dans lequel :
un ensemble, dit ensemble de découpe transversale, d'au moins deux lames discoïdales s'étendant chacune dans un plan parallèle à une direction, dite direction de découpe transversale, orthogonale à ladite direction de convoyage est entraîné en déplacements simultanés ;
   - transversalement selon une direction, dite direction de découpe, orthogonale à ladite direction de convoyage, et
   - de l'amont vers l'aval selon ladite direction de convoyage avec une vitesse égale à la vitesse de déplacement de la nappe selon ladite direction de convoyage,
procédé dans lequel, lors d'une première étape de découpe, ledit ensemble de découpe transversale est entraîné dans un premier sens de déplacement dudit ensemble de découpe transversale selon ladite direction de découpe, une première lame dudit ensemble de découpe transversale est placée dans une position abaissée dans laquelle la première lame est entraînée pour découper la nappe transversalement sur toute sa largeur, une deuxième lame dudit ensemble de découpe transversale est placée dans une position relevée à distance de la nappe et ne découpe pas la nappe, ce par quoi la nappe est découpée transversalement sur toute sa largeur, orthogonalement à ladite direction de convoyage et selon une découpe rectiligne.

Dans certains modes de réalisation, le procédé selon l'invention comprend une deuxième étape de découpe ultérieure à la première étape, lors de laquelle ledit ensemble de découpe transversale est entraîné dans un deuxième sens de déplacement, opposé au premier sens de déplacement, selon ladite direction de découpe, la deuxième lame est placée dans une position abaissée dans laquelle la deuxième lame est entraînée pour découper la nappe transversalement sur toute sa largeur et la première lame dudit ensemble de découpe transversale est placée dans une position relevée à distance de la nappe et ne découpe pas la nappe.

Dans certains modes de réalisation au moins l'une des première et deuxième étapes de découpe est suivie d'une étape de rappel dudit ensemble de découpe transversale vers l'amont selon ladite direction de convoyage avec une vitesse supérieure (en valeur absolue) à la vitesse de déplacement de la nappe selon ladite direction de convoyage, ladite étape de rappel comprenant une orientation des au moins deux lames discoïdales dudit ensemble de découpe transversale dans l'un des deux états d'orientation dudit ensemble de découpe transversale suivants :
- un premier état d'orientation dudit ensemble de découpe transversale dans lequel la première lame dudit ensemble de découpe transversale est placée dans une position abaissée dans laquelle la première lame est adaptée pour pouvoir être entraînée en rotation de façon à découper la nappe transversalement sur toute sa largeur dans un premier sens de déplacement et la deuxième lame dudit ensemble de découpe transversale est placée dans une position relevée à distance de la nappe, et
- un deuxième état d'orientation dudit ensemble de découpe transversale dans lequel la deuxième lame dudit ensemble de découpe transversale est placée dans une position abaissée dans laquelle la deuxième lame est adaptée pour pouvoir être entraînée en rotation de façon à découper la nappe transversalement sur toute sa largeur dans un deuxième sens de déplacement opposé au premier sens de déplacement et la première lame dudit ensemble de découpe transversale est placée dans une position relevée à distance de la nappe.

Selon certains modes de réalisation, la première lame et la deuxième lame dudit ensemble de découpe transversale présentent des sens de rotation opposés.

Selon certains modes de réalisation, le matériau solide est un matériau de construction, notamment un matériau isolant, de préférence un matériau isolant choisi dans le groupe formé des biomatériaux tels qu'une laine de chanvre et/ou une laine de fibres de lin et/ou une laine de fibres de coton, des laines minérales telles qu'une laine de verre ou qu'une laine de roche, des laines céramiques, des matériaux polymères tels que les polyuréthanes et des papiers.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1 est un schéma général illustratif hors invention de la découpe d'une nappe d'un matériau solide non pulvérulent ;
[fig. 2] La figure 2 est une vue à plat d'un dispositif de découpe selon l'invention dans une première configuration de découpe d'une nappe d'un matériau solide non pulvérulent, le dispositif de découpe étant vu dans l'axe de convoyage, la nappe étant convoyée de l'arrière vers l'avant en figure 2 ;

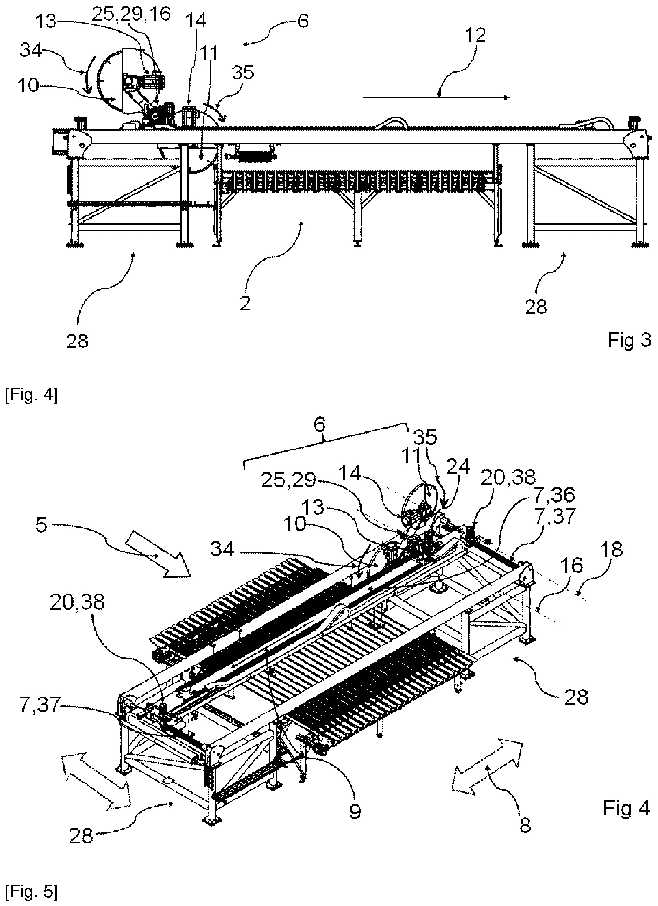

[fig. 3] La figure 3 est une vue à plat d'un dispositif de découpe selon l'invention dans une deuxième configuration de découpe d'une nappe d'un matériau solide non pulvérulent, le dispositif de découpe étant vu dans l'axe de convoyage, la nappe étant convoyée de l'arrière vers l'avant en figure 3 ;
[fig. 4] La figure 4 est une vue en perspective d'un dispositif de découpe selon l'invention dans une première configuration de découpe d'une nappe d'un matériau solide non pulvérulent illustrative d'une première étape d'un mode de réalisation d'un procédé de découpe d'une nappe d'un matériau solide non pulvérulent selon l'invention;

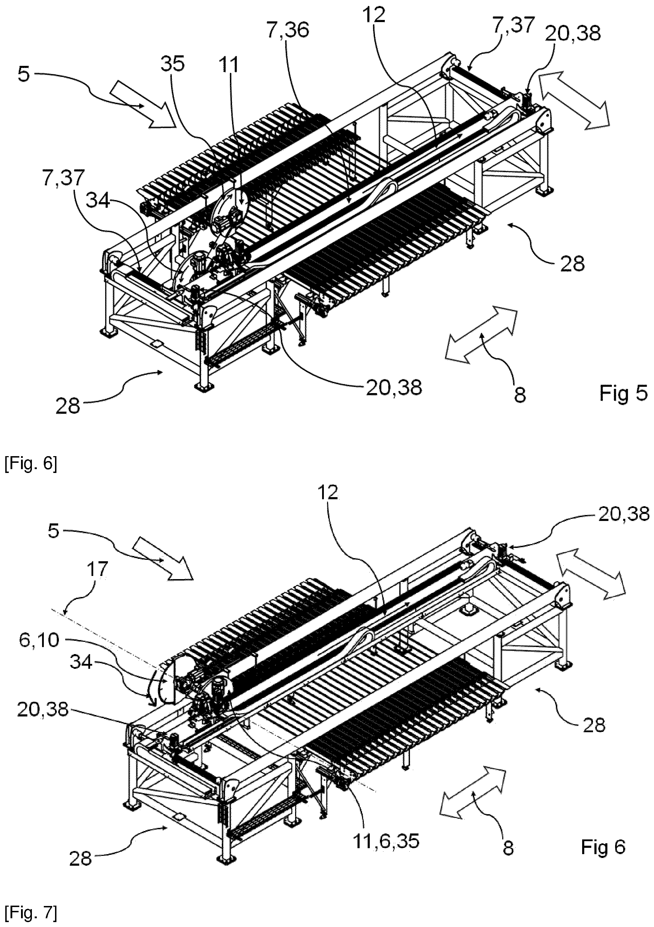

[fig. 5] La figure 5 est une vue en perspective d'un dispositif de découpe selon l'invention dans une deuxième configuration de découpe d'une nappe d'un matériau solide non pulvérulent illustrative d'une deuxième étape subséquente de la première étape du mode de réalisation du procédé de découpe d'une nappe d'un matériau solide non pulvérulent selon l'invention décrite en Figure 4;
[fig. 6] La figure 6 est une vue en perspective d'un dispositif de découpe selon l'invention dans une troisième configuration de découpe d'une nappe d'un matériau solide non pulvérulent illustrative d'une troisième étape subséquente de la deuxième étape du mode de réalisation du procédé de découpe d'une nappe d'un matériau solide non pulvérulent selon l'invention décrite en Figure 5;

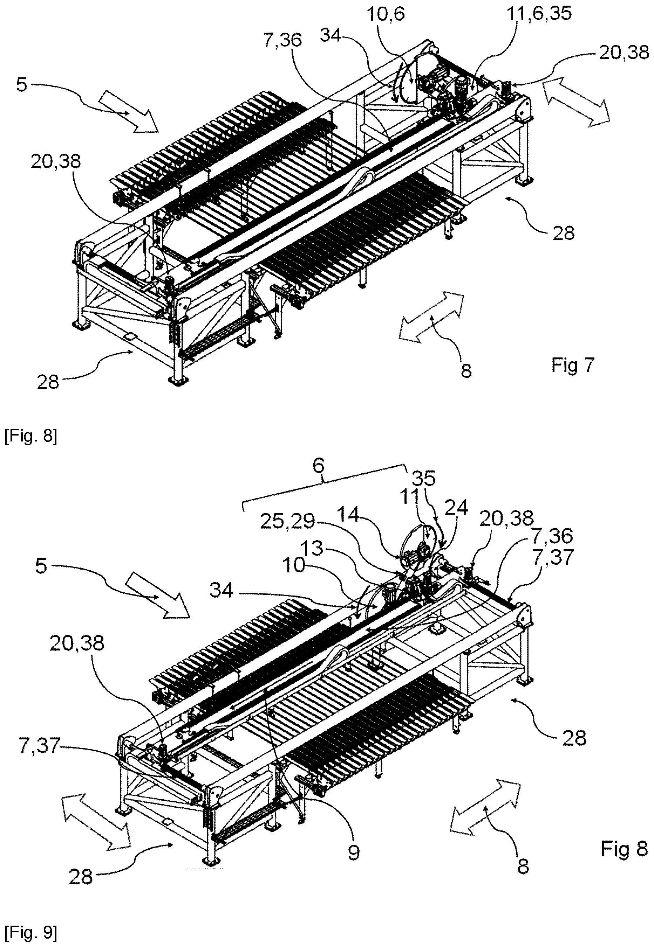

[fig. 7] La figure 7 est une vue en perspective d'un dispositif de découpe selon l'invention dans une quatrième configuration de découpe d'une nappe d'un matériau solide non pulvérulent illustrative d'une quatrième étape subséquente de la troisième étape du mode de réalisation du procédé de découpe d'une nappe d'un matériau solide non pulvérulent selon l'invention décrite en Figure 6 ;
[fig. 8] La figure 8 est une vue en perspective d'un dispositif de découpe selon l'invention dans une première/cinquième configuration de découpe d'une nappe d'un matériau solide non pulvérulent illustrative d'une première/cinquième étape subséquente de la quatrième étape du mode de réalisation du procédé de découpe d'une nappe d'un matériau solide non pulvérulent selon l'invention décrite en Figure 7 et en Figure 4, et

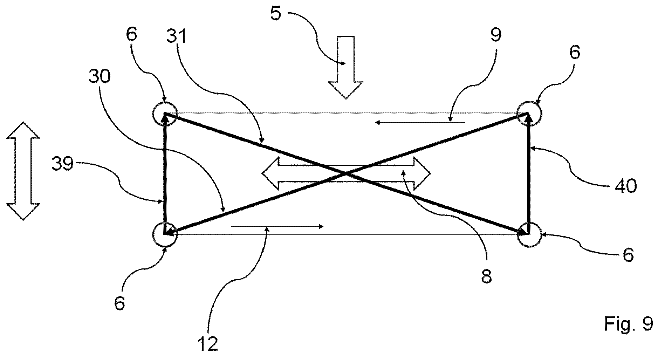

[fig. 9] La figure 9 est un schéma illustratif du déplacement, en vue de dessus, dudit ensemble de découpe transversale d'un dispositif de découpe selon l'invention lors de la mise en oeuvre d'un procédé de découpe d'une nappe d'un matériau solide non pulvérulent selon l'invention.

### Description de mode(s) de réalisation

Dans les figures, et à moins qu'il n'en soit disposé autrement, les éléments identiques porteront les mêmes signes de référence.

La figure 1 représentative de l'état de la technique a été décrite en partie introductive du présent texte. Une nappe 21 d'un matériau solide est entraînée en déplacement par un convoyeur (non représenté) selon une direction, dite direction 5 de convoyage, parallèle à une plus grande dimension de la nappe 21 et orientée de l'amont 3 vers l'aval 4 comme représenté par la flèche 5. En particulier, la partie amont 3 du dispositif 23 de découpe de l'art antérieur correspond à un site 3 de production du matériau solide et de formation de la nappe 21 et la partie aval 4 correspond à un site 4 de conditionnement, de stockage et de distribution des panneaux 22 dudit matériau solide découpés à partir de la nappe 21. Les panneaux 22 découpés à partir de la nappe 21 sont des panneaux en forme globalement de parallélépipèdes rectangles.

Le dispositif 1 de découpe selon l'invention représenté en Figure 2 est disposé chevauchant transversalement un convoyeur 2. Ni la nappe de matériau solide non pulvérulent, ni les panneaux découpés à partir de la nappe ne sont représentés. Le dispositif 1 de découpe comprend un ensemble support 28 adapté pour maintenir un chariot 7 (non visible en figures 2 et 3) dans une position sensiblement horizontale et surplombant transversalement le convoyeur 2 et à distance de ce convoyeur 2. Le dispositif 1 de découpe comprend un ensemble, dit ensemble 6 de découpe transversale, de deux lames 10,11 discoïdales coplanaires et s'étendant chacune dans un même plan orthogonal à ladite direction 5 de convoyage. Les deux lames 10,11 discoïdales sont partiellement protégées par un carter. En figures 2 et 3, ladite direction 5 de convoyage est orthogonale au plan des figures. Chacune des lames 10,11 est munie d'un dispositif moteur 13,14 d'entrainement en rotation sur elles-mêmes de la lame 10 et de la lame 11 chacune selon un axe de rotation parallèle à ladite direction de convoyage. Le sens de rotation de la lame 10 est un sens de rotation antihoraire représenté par une flèche 34 correspondante. Le sens de rotation de la lame 11 est un sens de rotation horaire représenté par une flèche 35 correspondante. Les lames 10,11 présentent des sens de rotation opposés pour un même angle d'observation. La première lame 10 présente un sens de rotation choisi pour exercer une contrainte orientée du haut vers le bas et maintenir la nappe de matériau solide non pulvérulent plaquée et en contact avec la face supérieure du convoyeur 2. Ledit ensemble 6 de découpe transversale comprend des moyens 25 d'orientation dudit ensemble 6 de découpe transversale comprenant un dispositif 29 moteur d'orientation dudit ensemble 6 de découpe transversale entre deux positions alternatives dudit ensemble 6 de découpe transversale. Dans une première position alternative dudit ensemble 6 de découpe transversale représentée en Figure 2, la première lame 10 est placée et maintenue dans une position abaissée, la deuxième lame 11 étant maintenue dans une position relevée à distance de la nappe. A partir de cette position abaissée, la première lame 10 peut être entraînée en rotation par le dispositif 13 moteur d'entrainement de la lame 10 en rotation sur elle-même dans le sens 34 antihoraire de rotation. Le déplacement dudit ensemble 6 de découpe transversale selon un premier sens 9 de déplacement dudit ensemble 6 de découpe transversale combinée à la rotation de la première lame 10 permet la découpe de la nappe transversalement dans un premier sens 9 transversal de découpe. Une deuxième position alternative dudit ensemble 6 de découpe transversale est représentée en Figure 3. Cette deuxième position alternative dudit ensemble 6 de découpe transversale découle de la première position alternative de la Figure 2 par basculement des première et deuxième lame dans le sens horaire et d'une valeur d'angle de 90° selon l'axe de rotation du dispositif 29 moteur d'orientation.

Dans une deuxième position alternative dudit ensemble 6 de découpe transversale représentée en Figure 3, la deuxième lame 11 est placée et maintenue dans une position abaissée, la première lame 10 étant maintenue dans une position relevée à distance de la nappe. En Figure 3, la deuxième lame 11 présente un sens de rotation choisi pour exercer une contrainte orientée du haut vers le bas et maintenir la nappe de matériau solide non pulvérulent plaquée et et en contact avec la face supérieure du convoyeur 2. A partir de cette position abaissée, la deuxième lame 11 peut être entraînée en rotation par le dispositif 14 moteur d'entrainement de la deuxième lame 11 en rotation sur elle-même dans le sens 35 horaire de rotation. Le déplacement dudit ensemble 6 de découpe transversale selon un deuxième sens 12 de déplacement dudit ensemble 6 de découpe transversale combiné à la rotation de la deuxième lame 11 permet la découpe de la nappe transversalement dans un deuxième sens 12 transversal de découpe. Un retour à la première position alternative dudit ensemble 6 de découpe transversale telle que représentée en Figure 2 est obtenu par basculement des première et deuxième lames 10,11 dans le sens antihoraire et d'une valeur d'angle de 90° selon l'axe de rotation du dispositif 29 moteur d'orientation.

Les vues en perspective d'un dispositif 1 de découpe selon l'invention représentées en Figure 4, 5, 6, 7 et 8 correspondent à des états successifs du dispositif 1 de découpe, occupés transitoirement par le dispositif 1 de découpe lors de la mise en oeuvre d'un procédé de découpe d'une nappe d'un matériau solide non pulvérulent selon l'invention. En figures 4, 5, 6, 7 et 8 la nappe de matériau solide non pulvérulent n'est pas représentée aux fins de simplification des vues. Par ailleurs, en figures 4, 5, 6, 7 et 8, la direction et le sens de convoyage de la nappe sur le convoyeur 2 est indiquée par une flèche 5 unidirectionnelle. Les vues en perspective des Figures 4 et 8 correspondent à la vue à plat de la Figure 2. La vue en perspective de la Figure 6 correspond à la vue à plat de la Figure 3.

Dans un premier état du dispositif 1 de découpe représenté en Figure 4, ledit ensemble 6 de découpe transversale est positionné à gauche du dispositif 1 de découpe par rapport à ladite direction 5 de convoyage et en position amont par rapport au dispositif 1 de découpe et à ladite direction 5 de convoyage. En Figure 4, ledit ensemble 6 de découpe transversale est représenté à droite sur le dessin. Dans ce premier état, la première lame 10 est en position abaissée et adaptée pour pouvoir découper la nappe. Le dispositif 1 de découpe comprend un chariot 7 adapté pour permettre un déplacement dudit ensemble 6 de découpe transversale selon une direction, dite direction 8 de découpe transversale, orthogonale à ladite direction 5 de convoyage. Le chariot 7 comprend un rail 36 rectiligne de guidage dudit ensemble 6 de découpe transversale disposé sensiblement horizontalement et orthogonalement à ladite direction 5 de convoyage. Le chariot 7 comprend des moyens 24 moteurs d'entrainement dudit ensemble 6 de découpe transversale sur le rail 36 rectiligne de guidage transversal. Les moyens 24 moteurs d'entrainement dudit ensemble 6 de découpe transversale sur le rail 36 rectiligne de guidage peuvent être de tout type. Les moyens 24 moteurs d'entrainement dudit ensemble 6 de découpe transversale sur le rail 36 rectiligne de guidage sont adaptés pour permettre un entrainement et un guidage rectiligne dudit ensemble 6 de découpe transversale selon ladite direction 8 de découpe transversale dans l'un et l'autre des deux sens opposés (aller et retour) de déplacement transversal dudit ensemble 6 de découpe. Le chariot 7 comprend des moyens 20 d'entrainement du chariot 7, du rail 36 rectiligne et dudit ensemble 6 de découpe transversale selon ladite direction 5 de convoyage. Les moyens 20 d'entrainement du chariot 7, du rail 36 rectiligne et dudit ensemble 6 de découpe transversale selon ladite direction 5 de convoyage peuvent être de tout type. Les moyens 20 d'entrainement du chariot 7, du rail 36 rectiligne et dudit ensemble 6 de découpe transversale selon ladite direction 5 de convoyage sont adaptés pour maintenir le rail 36 rectiligne parallèle à ladite direction 8 de découpe transversale lors du déplacement du chariot 7 selon ladite direction 8 de découpe transversale. Les moyens 20 d'entrainement du chariot 7, du rail 36 rectiligne et dudit ensemble 6 de découpe transversale selon ladite direction 5 de convoyage comprennent deux rails 37 latéraux de guidage et deux organes 38 moteurs synchronisés et disposés chacun à l'une des extrémités du rail 36 de guidage rectiligne. Les deux organes 38 moteurs synchronisés coopèrent chacun avec l'un des deux rails 37 latéraux de guidage et maintiennent le rail 36 rectiligne parallèle à ladite direction 8 de découpe transversale lors du déplacement du chariot 7 selon ladite direction 8 de découpe transversale. En outre, les deux organes 38 moteurs synchronisés sont contrôlés pour conférer au chariot 7, au rail 36 rectiligne, audit ensemble 6 de découpe transversale et à chacune des première et deuxième lames 10,11 une vitesse de déplacement selon ladite direction 5 de convoyage de valeur égale à la vitesse de déplacement de la nappe selon ladite direction 5 de convoyage. Lors d'une première étape 30 de découpe (schématisée en Figure 9), ledit ensemble 6 de découpe transversale est entraîné de façon synchrone en déplacement selon ladite direction 8 de découpe transversale du fait des moyens 24 moteurs d'entrainement dudit ensemble 6 de découpe transversale sur le rail 36 rectiligne de guidage et en déplacement selon ladite direction 5 de convoyage du fait du déplacement du chariot 7 entraîné en déplacement selon ladite direction 5 de convoyage par les organes 38 moteurs synchronisés entre eux. En combinaison avec l'activation du dispositif moteur 13 d'entrainement de la première lame 10 en rotation sur elle-même, il résulte du déplacement dudit ensemble 6 de découpe transversale une découpe transversale de la nappe de matériau solide non pulvérulent. La position dudit ensemble 6 de découpe transversale à l'issue de la première étape 30 de découpe est représentée en Figure 5.

En figure 5, l'ensemble 6 de découpe transversale est positionné à droite du dispositif 1 de découpe par rapport à ladite direction 5 de convoyage et en position avale par rapport au dispositif 1 de découpe et à ladite direction 5 de convoyage. A l'issue de la première étape 30 de découpe, la première lame 10 est en position abaissée de découpe et la deuxième lame 11 est en position relevée. Lors d'une première étape 39 de rappel, le chariot 7, l'ensemble 6 de découpe transversale et les première et deuxième lames 10,11 sont ramenées d'une position aval marquant l'issue de la première étape 30 de découpe vers une position amont par rapport à ladite direction 5 de convoyage marquant l'initiation d'une deuxième étape 31 de découpe. Lors de cette première étape 39 de rappel, les première et deuxième lames 10,11 sont entraînées en basculement dans le sens horaire et d'une valeur d'angle de 90° selon l'axe de rotation du dispositif 29 moteur d'orientation. L'état du dispositif 1 de découpe lors de l'initiation de la deuxième étape 31 de découpe est représenté en Figure 6.

En Figure 6, l'ensemble 6 de découpe transversale est positionné à droite du dispositif 1 de découpe par rapport à ladite direction 5 de convoyage et en position amont par rapport au dispositif 1 de découpe et à ladite direction 5 de convoyage. A l'initiation de la deuxième étape 31 de découpe, la première lame 10 est en position relevée et la deuxième lame 11 est en position abaissée de découpe. Lors de la deuxième étape 31 de découpe (schématisée en Figure 9), la deuxième lame 11 est entraînée en rotation sur elle-même par le dispositif moteur 14 d'entrainement de la deuxième lame 11. Lors de la deuxième étape 31 de découpe, ledit ensemble 6 de découpe transversale est entraîné de façon synchrone en déplacement selon ladite direction 8 de découpe transversale du fait des moyens 24 moteurs d'entrainement dudit ensemble 6 de découpe transversale sur le rail 36 rectiligne de guidage. Lors de la deuxième étape 31 de découpe, ledit ensemble 6 de découpe transversale est entraîné de façon synchrone en déplacement selon ladite direction 5 de convoyage du fait du déplacement du chariot 7 entraîné en déplacement selon ladite direction 5 de convoyage par les organes 38 moteurs synchronisés entre eux. En combinaison avec l'activation du dispositif moteur 14 d'entrainement de la deuxième lame 11 en rotation sur elle-même, il résulte du déplacement dudit ensemble 6 de découpe transversale une découpe transversale de la nappe de matériau solide non pulvérulent selon le deuxième sens 12 de déplacement dudit ensemble 6 de découpe transversale. La position dudit ensemble 6 de découpe transversale à l'issue de la deuxième étape 31 de découpe est représentée en Figure 7.

En figure 7, l'ensemble 6 de découpe transversale est positionné à droite du dispositif 1 de découpe par rapport à ladite direction 5 de convoyage et en position aval par rapport au dispositif 1 de découpe et à ladite direction 5 de convoyage. A l'issue de la deuxième étape 31 de découpe, la première lame 10 est en position relevée et la deuxième lame 11 est en position abaissée de découpe. Lors d'une deuxième étape 40 de rappel, le chariot 7, l'ensemble 6 de découpe transversale et les première et deuxième lames 10,11 sont ramenées d'une position aval marquant l'issue de la deuxième étape 31 de découpe vers une position amont par rapport à ladite direction 5 de convoyage marquant l'initiation d'une étape subséquente de découpe correspondant à la première étape 30 de découpe décrite ci-dessus. Lors de cette deuxième étape 40 de rappel, les première et deuxième lames 10,11 sont entraînées en basculement dans le sens antihoraire et d'une valeur d'angle de 90° selon l'axe de rotation du dispositif 29 moteur d'orientation. L'état du dispositif 1 de découpe lors de l'initiation d'une étape subséquente de découpe est représenté en Figure 8.

La figure 9 est une représentation schématique d'un procédé de découpe d'une nappe d'un matériau solide non pulvérulent selon l'invention retraçant schématiquement le déplacement dudit ensemble 6 de découpe transversale par rapport au dispositif 1 de découpe selon l'invention. Partant d'une position initiale dudit ensemble 6 de découpe transversale située en amont et à gauche par rapport à ladite direction 5 de convoyage (en haut à droite sur la figure 9), ledit ensemble 6 de découpe transversale est entraîné dans une première étape 30 de découpe en déplacements synchrone selon le premier sens 9 de déplacement dudit ensemble 6 de découpe transversale et d'amont en aval. Lors d'une première étape 39 de rappel, ledit ensemble 6 de découpe transversale est ramené de l'aval vers l'amont, sans procéder à une découpe lors de cette étape 39. Puis, lors d'une deuxième étape 31 de découpe, ledit ensemble 6 de découpe transversale est entraîné en déplacements synchrone selon le deuxième sens 12 (retour) de déplacement dudit ensemble 6 de découpe transversale et d'amont en aval. Lors d'une deuxième étape 40 de rappel, ledit ensemble 6 de découpe transversale est ramené de l'aval vers l'amont, sans procéder à une découpe lors de cette étape 40 dans une position propre à permettre l'initiation d'une étape subséquente de découpe.

Le déplacement dudit ensemble 6 de découpe transversale est optimisé dans les deux sens 9,12 de déplacements transversaux, ainsi que le basculement alternatif des deux lames 10,11 discoïdales permettant une découpe transversale de la nappe qui est efficace, rapide, qui ne nécessite pas une inversion du sens de rotation d'une lame. Le procédé de découpe et le dispositif selon l'invention permettent d'augmenter la cadence de production de panneaux de matériaux solides, notamment de panneaux pour la construction.

## Revendications

1. Dispositif (1) de découpe d'une nappe (21) d'un matériau solide non pulvérulent, entraînée en déplacement par un convoyeur (2) selon une direction, dite direction (5) de convoyage, parallèle à une plus grande dimension de la nappe (21),
le dispositif (1) de découpe comprenant :
- un ensemble, dit ensemble (6) de découpe transversale, d'au moins deux lames (10,11) discoïdales s'étendant chacune dans un plan parallèle à une direction, dite direction (8) de découpe transversale, orthogonale à ladite direction de convoyage,
- au moins un chariot (7) supportant ledit ensemble (6) de découpe transversale,
- des moyens (20) d'entrainement du chariot (7) selon ladite direction (5) de convoyage à vitesse d'entrainement sensiblement égale à la vitesse de convoyage de la nappe sur le convoyeur (2) selon ladite direction (5) de convoyage,
**caractérisé en ce que** ;
ledit au moins un chariot (7) comprend des moyens (24) d'entrainement dudit ensemble (6) de découpe transversale en déplacement sur toute la largeur de la nappe selon ladite direction (8) de découpe transversale, et **en ce que** ;
ledit ensemble (6) de découpe transversale comprend des moyens (25) d'orientation dudit ensemble (6) de découpe transversale adaptés pour, dans un premier sens (9) de déplacement dudit ensemble (6) de découpe transversale selon ladite direction (8) de découpe transversale, maintenir une première lame (10) dudit ensemble (6) de découpe transversale dans une position abaissée dans laquelle la première lame (10) est entraînée en rotation de façon à découper la nappe (21) transversalement sur toute sa largeur dans le premier sens (9) de déplacement et maintenir une deuxième lame (11) dudit ensemble de découpe transversale dans une position relevée à distance de la nappe de façon à ne pas découper la nappe (21).

2. Dispositif (1) selon la revendication 1, **caractérisé en ce que** les moyens (25) d'orientation dudit ensemble (6) de découpe transversale sont adaptés pour, dans un deuxième sens (12) de déplacement dudit ensemble (6) de découpe transversale par rapport au chariot (7), opposé au premier sens (9) de déplacement, la deuxième lame (11) est dans une position abaissée dans laquelle la deuxième lame (11) est entraînée de façon à découper la nappe (2) transversalement sur toute sa largeur selon le deuxième sens (12) de déplacement et la première lame (10) dudit ensemble (6) de découpe transversale est dans une position relevée à distance de la nappe de façon à ne pas découper la nappe (2).

3. Dispositif selon l'une des revendications 1 ou 2, **caractérisé en ce que** le dispositif (1) comprend une carte (26) électronique configurée pour contrôler :
- les moyens (20) d'entrainement du chariot (7) selon ladite direction (5) de convoyage de façon à entraîner ledit ensemble (6) de découpe transversale de l'amont vers l'aval avec une vitesse égale à la vitesse de convoyage de la nappe (21) selon ladite direction (5) de convoyage lorsque les moyens (24) d'entrainement dudit ensemble (6) de découpe transversale entraînent ledit ensemble (6) de découpe transversale selon l'un des premier et deuxième sens (9,12)) de déplacement dudit ensemble (6) de découpe transversale, et/ou
- les moyens (20) d'entrainement du chariot (7) selon ladite direction (5) de convoyage de façon à entraîner ledit ensemble (6) de découpe transversale de l'aval vers l'amont avec une vitesse supérieure à la vitesse de convoyage de la nappe (21) selon ladite direction (5) de convoyage, lorsque les moyens (24) d'entrainement dudit ensemble (6) de découpe transversale n'entrainent pas ledit ensemble (6) de découpe transversale, et/ou
- les moyens (24) d'entrainement dudit ensemble (6) de découpe transversale en déplacement sur toute la largeur de la nappe selon ladite direction (8) de découpe transversale dans l'un ou l'autre des premier et deuxième sens de déplacement dudit ensemble (6) de découpe transversale de façon à entraîner ledit ensemble (6) de découpe transversale avec une vitesse adaptée pour découper la nappe orthogonalement à la plus grande dimension de la nappe (21) dans chacun des premier et deuxième sens de déplacement dudit ensemble (6) de découpe transversale,
- les moyens (25) d'orientation dudit ensemble (6) de découpe transversale dans chacun des premier et deuxième sens de déplacement dudit ensemble (6) de découpe transversale.

4. Dispositif selon l'une des revendications 1 à 3, **caractérisé en ce que** ledit ensemble (6) de découpe transversale comprend deux lames (10,11) discoïdales, chacune des deux lames (10,11) discoïdales étant munie d'un dispositif moteur (13,14) propre d'entrainement de la lame (10,11) en rotation.

5. Dispositif selon l'une des revendications 1 à 4, **caractérisé en ce que** ledit ensemble (6) de découpe transversale est conformé pour présenter un angle α de basculement, de valeur non nulle et inférieure ou égale à 180° et adaptée en regard d'une plus petite dimension de la nappe à découper.

6. Dispositif selon l'une des revendications 1 à 5, **caractérisé en ce que** qu'il comprend un dispositif moteur (25) de basculement dudit ensemble (6) de découpe transversale selon un axe (16) de basculement parallèle à ladite direction (5) de convoyage.

7. Dispositif selon l'une des revendications 1 à 6, **caractérisé en ce que** la première lame (10) et la deuxième lame (11) dudit ensemble (6) de découpe transversale présentent des sens de rotation opposés.

8. Dispositif selon l'une des revendications 1 à 7, **caractérisé en ce qu'**il comprend au moins un deuxième ensemble de lames, dit ensemble (19) de découpe longitudinale, adapté pour découper la nappe de matériau solide selon une direction de coupe parallèle à la direction (5) de déplacement de la nappe.

9. Dispositif selon la revendication 8, **caractérisé en ce qu'**au moins l'une des lames dudit ensemble (19) de découpe longitudinale est escamotable et ou repositionnable selon ladite direction (8) de découpe transversale.

10. Dispositif selon l'une des revendications 1 à 9, **caractérisé en ce que** ledit ensemble (6) de découpe transversale est monté mobile sur le chariot (7) selon ladite direction (8) de découpe sur une distance comprise entre de l'ordre de 1,0 m et de l'ordre de 6,0 m.

11. Dispositif selon l'une des revendications 1 à 10, **caractérisé en ce que** le convoyeur (2) est configuré pour pouvoir entraîner la nappe (21) de matériau solide en déplacement selon ladite direction (5) de convoyage avec une vitesse comprise entre de l'ordre de 1 m/min et de l'ordre de 50 m/min.

12. Procédé de découpe d'une nappe (21) d'un matériau solide entraînée en déplacement selon une direction, dite direction (5) de convoyage, parallèle à une plus grande dimension de la nappe, procédé dans lequel :
un ensemble, dit ensemble (6) de découpe transversale, d'au moins deux lames (10,11) discoïdales s'étendant chacune dans un plan parallèle à une direction, dite direction (8) de découpe transversale, orthogonale à ladite direction (5) de convoyage est entraîné en déplacement ;
- transversalement selon une direction, dite direction (8) de découpe, orthogonale à ladite direction (5) de convoyage, et
- selon ladite direction (5) de convoyage avec une vitesse égale à la vitesse de déplacement de la nappe (21) selon ladite direction (5) de convoyage,
procédé dans lequel, lors d'une première étape (30) de découpe, ledit ensemble (6) de découpe transversale est entraîné dans un premier sens (9) de déplacement dudit ensemble (6) de découpe transversale selon ladite direction (8) de découpe, une première lame (10) dudit ensemble (6) de découpe transversale est placée dans une position abaissée dans laquelle la première lame (10) est entraînée pour découper la nappe (21) transversalement sur toute sa largeur, une deuxième lame (11) dudit ensemble (6) de découpe transversale est placée dans une position relevée à distance de la nappe (21) et ne découpe pas la nappe (21), ce par quoi la nappe (21) est découpée transversalement sur toute sa largeur, orthogonalement à ladite direction (5) de convoyage et selon une découpe rectiligne.

13. Procédé selon la revendication 12, **caractérisé en ce que**, lors d'une deuxième étape de découpe suivant la première étape (30) de découpe, ledit ensemble (6) de découpe transversale est entraîné dans un deuxième sens (12) de déplacement, opposé au premier sens (9) de déplacement, selon ladite direction (8) de découpe, la deuxième lame (11) est placée dans une position abaissée dans laquelle la deuxième lame (11) est entraînée pour découper la nappe transversalement sur toute sa largeur et la première lame (10) dudit ensemble (6) de découpe transversale est placée dans une position relevée à distance de la nappe et ne découpe pas la nappe.

14. Procédé selon l'une des revendications 12 ou 13, **caractérisé en ce que** la première lame (10) et la deuxième lame (11) dudit ensemble (6) de découpe transversale présentent des sens de rotation opposés.

15. Procédé selon l'une des revendications 12 à 14, **caractérisé en ce que** le matériau solide est un matériau de construction, notamment un matériau isolant choisi dans le groupe formé des biomatériaux, des laines minérales, des laines céramiques, des matériaux polymères et des papiers.
